# EUROPÄISCHE PATENTSCHRIFT

(11) **EP 2 038 811 B1**
(45) Veröffentlichungstag und Bekanntmachung des Hinweises auf die Patenterteilung: **02.01.2013**
(21) Anmeldenummer: 07765668.4
(22) Anmeldetag: 27.06.2007
(51) Int. Cl.: G06K 7/00, G06K 19/07, G06K 19/077, G07F 7/10, G06Q 20/40, G06Q 20/34

(54) **WERT- ODER SICHERHEITSDOKUMENT MIT ZUMINDEST ZWEI ANZEIGEVORRICHTUNGEN**
SECURITY OR VALUABLE DOCUMENT WITH AT LEAST TWO DISPLAY MECHANISMS
DOCUMENT DE VALEUR OU DE SÉCURITÉ AVEC AU MOINS DEUX DISPOSITIFS INDICATEURS

(30) Priorität: 29.06.2006 DE 102006030406
(43) Veröffentlichungstag der Anmeldung: 25.03.2009
(73) Patentinhaber: Bundesdruckerei GmbH, 10958 Berlin (DE)
(72) Erfinder: PAESCHKE, Manfred, 16348 Wandlitz (DE); PFLUGHOEFFT, Malte, 13347 Berlin (DE); BEYER-MEKLENBURG, Guenter, 16816 Neuruppin (DE); KUETER, Joachim, 10179 Berlin (DE)
(74) Vertreter: Richardt Patentanwälte GbR
(86) Internationale Anmeldenummer: PCT/EP2007/056416
(87) Internationale Veröffentlichungsnummer: WO 2008/000764

(56) Entgegenhaltungen:
- WO-A-99/38117
- WO-A-2005/024595
- US-A- 5 151 684
- US-A- 5 227 613
- US-A1- 2001 020 935

## Beschreibung

Die Erfindung betrifft ein Wert- oder Sicherheitsdokument, sowie ein Schreibgerät zur Durchführung eines Schreibzugriffs auf einen Datenspeicher des Dokuments.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkarte, insbesondere als sogenannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Desweiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Chipkarten können eine integrierte Anzeigevorrichtung aufweisen, wie es z.B. aus EP 0920675, WO2004/080100 und US 6,019,284 bekannt ist.

Aus der US 6,340,965 B1 ist ferner elektronisches Papier bekannt, durch welches ein wieder verwendbares Formular gebildet wird.

Zum Beispiel aus der US 6,019,284 und der EP 0 920 675 sind flexible Karten mit Display bekannt. Diese Karten haben jedoch nur ein einziges, einseitiges Anzeigeelement.

Von der Firma AU Optronics ist ferner ein zweiseitiges OLED-Display vorgestellt worden, das auf seiner Vorder- und Rückseite unabhängig voneinander zwei Farbbilder darstellen kann. Solche Displays sind für die Anwendung in Handys vorgesehen.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Schutzmechanismen zum Schutz gegen unbefugtes Auslesen der Daten aus einem solchen Dokument werden auch als "Basic Access Control" bezeichnet, vgl. hierzu "Machine Readable Travel Documents, Technical Report, PKI for Machine Readable Travel Documents Offering ICC Read-Only Access, Version 1.1, Oktober 01, 2004, International Civil Aviation Organisation (ICAO) (http://www.csca-si.gov.si/TR-PKI_mrtds_ICC_read-only_access_v1_1.pdf)

Aus dem Stand der Technik sind ferner Verfahren bekannt, Daten unter kryptografischem Schutz elektronisch zu speichern. Eine in den vergangenen zwei Jahrzehnten zu großer Verbreitung gelangte Form geschützter Speicher sind elektronische Chipkarten, die durch ISO 7816 Teil 1 bis 4 normiert sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird.

Zur Aktualisierung personengebundener Informationen auf Wert- oder Sicherheitsdokumenten stehen heute nur wenige Verfahren zur Verfügung. Zum einen kann es notwendig sein, das Dokument neu auszustellen, was die Sicherheit des Dokuments sowie den Schutz gegen Veränderung und Verfälschung gewährleistet. Dieses ist jedoch ein aufwendiger und bei heutigen Personaldokumenten teurer Weg. Aus diesem Grund wird zum Beispiel im Falle eines Umzugs in Deutschland die neue Adresse mittels eines Aufklebers auf das Dokument aufgebracht. Die Sicherheit und Unveränderbarkeit des Dokuments bleibt zwar gewährleistet, jedoch sind die aktualisierten Daten, das heißt die Angabe der neuen Adresse, nicht im gleichen Maße gegen Veränderung oder Entfernung geschützt, wie die ursprünglichen Daten.

Aus WO 2005/024595 A2 ist ein RFID-Tag bekannt, welches ein von einem Prozessor ansteuerbares Display aufweist. Anspruch 1 gege dieses Dokument abgegrenzt.

Aus US 5,227,613 ist ein Datenkommunikationssystem bekannt, welches die Kommunikation verschlüsselter Daten zwischen Chipkarten offenbart, die in entsprechende Terminals gesteckt sind.

Aus der WO 99/38117 ist eine Smartcard mit einem integrierten Display bekannt.

Aus der US 5,151,684 ist ein elektronisches Sicherheitsetikett bekannt.

Aus 2001/0020935 A1 ist ein elektronisches Smartlabel bekannt, welches elektronische Tinte verwendet.

Der Erfindung liegt dem gegenüber die Aufgabe zu Grunde, ein Wert- und Sicherheitsdokument zu schaffen, welches sowohl die Veränderbarkeit personenbezogener Daten durch eine autorisierte Instanz, wie z.B. eine Behörde, ermöglicht als auch den Schutz solcher Daten gegen Veränderung oder Verfälschung seitens nicht-autorisierter Personen gewährleistet. Des Weiteren liegt der Erfindung ein Schreibgerät zur Durchführung eines externen Schreibzugriffs auf den Datenspeicher des Dokuments zu Grunde.

Die der Erfindung zu Grunde liegenden Aufgaben werden jeweils mit den Merkmalen des unabhängigen Patentanspruchs gelöst, Bevorzugte Ausführungsformen der Erfindung sind in den abhängigen Patentansprüchen angegeben.

Ausführungsformen eines erfindungsgemäßen Wert- oder Sicherheitsdokuments bieten einen verbesserten Schutz gegen Manipulationen und/oder Fälschungen, da sich ein solches Wert- oder Sicherheitsdokument mit zwei Anzeigevorrichtungen nicht oder nur schwer manipulieren oder kopieren lässt. Andererseits ermöglichen Ausführungsformen des erfindungsgemäßen Wert- oder Sicherheitsdokuments die Aktualisierung von Personalisierungsdaten, insbesondere von personengebundenen Informationen, durch die hierzu autorisierte Instanz, wobei hinsichtlich der aktualisierten Daten im wesentlichen

derselbe Schutz hinsichtlich Veränderung oder Entfernung gegeben ist, wie bei den O-riginaldaten.

Erfindungsgemäß ist ferner besonders vorteilhaft, dass das Wert- oder Sicherheitsdokument nicht über eine eigene Energieversorgungsquelle, wie zum Beispiel eine Batterie, verfügen muss, sondern dass die Energieversorgung über eine Schnittstelle des Wert- oder Sicherheitsdokuments erfolgt. Dies ist insbesondere vorteilhaft, um die Funktionsfähigkeit des Wert- oder Sicherheitsdokuments über seine gesamte Laufzeit hin zu gewährleisten. Von besonderem Vorteil ist dabei, wenn die Schnittstelle als kontaktlose Schnittstelle ausgebildet ist, da dann auch das Problem der Korrosion der Kontakte der Schnittstelle über die Laufzeit des Wert- oder Sicherheitsdokuments entfällt.

Erfindungsgemäß ist zumindest eine der Anzeigevorrichtungen des Wert- oder Sicherheitsdokuments so ausgebildet, dass diese zum Anzeigen von Informationen keine Energie aufnehmen muss. Eine solche Anzeigevorrichtung ist erfindungsgemäß durch eine bistabile Anzeigetechnologie realisiert. Dies hat den Vorteil, dass jedenfalls die auf dieser Anzeigevorrichtung des Wert- oder Sicherheitsdokuments angezeigten Informationen auch dann lesbar sind, wenn gerade kein Lesegerät zur Verfügung steht.

Nach einer Ausführungsform der Erfindung beruhen die Anzeigevorrichtungen auf der gleichen Technologie, besonders bevorzugt auf einer bistabilen Anzeigetechnologie, wie zum Beispiel elektrophoretischer, elektrochromer oder Drehelement-Anzeigetechnologie.

Durch die Ansteuerung der zumindest ersten und zweiten Anzeigevorrichtungen von demselben Prozessor ergibt sich die Notwendigkeit der Kontaktierung von den beiden Anzeigevorrichtungen innerhalb des Wert- oder Sicherheitsdokuments mit diesem einen Prozessor. Dadurch ist ein besonders Maß an Sicherheit gegen Fälschungen und Manipulationen gegeben.

Nach einer Ausführungsform der Erfindung hat das Wert- oder Sicherheitsdokument eine Dicke von höchstens 2 mm, vorzugsweise höchstens 1 mm, insbesondere höchstens 840 µm. Eine solche flache Ausführungsform des Wert- oder Sicherheitsdokuments hat den Vorteil einer besonderen Fälschungssicherheit und Sicherheit von Manipulationen sowie den Handhabungsvorteil einer besonderen Flexibilität.

Nach einer Ausführungsform der Erfindung hat das Wert- oder Sicherheitsdokument beidseitig jeweils zumindest eine Anzeigevorrichtung, wobei auf den Anzeigevorrichtungen jeweils verschiedene Informationen statisch, quasi-statisch oder veränderlich dargestellt werden können. Insbesondere ermöglicht es die vorliegende Erfindung damit, ein den Vorgaben der ICAO konformes, international interoperables Wert- und Sicherheitsdokument herzustellen, welches auf beiden Seiten statische, quasi-statische und /oder variable Informationen über die entsprechenden Anzeigevorrichtungen ausgeben kann.

Nach einer Ausführungsform der Erfindung wird ein Dokument mit einem Datenspeicher zur Speicherung von Personalisierungsdaten geschaffen. Das Dokument hat zumindest eine erste Anzeigevorrichtung zur Anzeige der Personalisierungsdaten, Mittel zur Durchführung eines kryptographischen Protokolls und eine Schnittstelle für einen externen Schreibzugriff auf den Datenspeicher zur Veränderung der Personalisierungsdaten, wobei der externe Schreibzugriff die Durchführung des kryptographischen Protokolls voraussetzt.

Die Erfindung ermöglicht die Veränderung der auf einem Wert- und Sicherheitsdokument dargestellten veränderbaren personenbezogenen Daten auf sichere Weise. Hierzu werden die veränderbaren personenbezogenen Daten in den Datenspeicher des Dokuments mittels eines kryptographischen Protokolls übertragen und von dort auf dem Anzeigeelement dargestellt. Damit entfällt die Notwendigkeit der Ausstellung eines neuen Dokuments oder der Aktualisierung von Personalisierungsdaten bei verminderter Manipulationssicherheit.

Im Vergleich zum Stand der Technik hat dies den Vorteil, dass das Dokument nicht durch ein neues ersetzt werden muss, wenn sich Personalisierungsdaten geändert haben. Ferner muss das Dokument erfindungsgemäß auch nicht modifiziert werden, wie zum Beispiel durch Aufbringen eines zusätzlichen Aufdrucks oder Aufklebers durch eine hierzu autorisierte Behörde, sondern die Aktualisierung der Personalisierungsdaten kann ausschließlich auf elektronischem Wege durch einen externen Schreibzugriff durchgeführt werden.

Zum Zwecke der Interoperabilität von Ausführungsformen des erfindungsgemäßen Wert- oder Sicherheitsdokuments erfolgt der gesicherte Austausch von Daten zwischen einem Terminal, wie zum Beispiel einem Schreib- und / oder Lesegerät, und dem Dokument bevorzugt so, dass dabei die von der ICAO vorgegebenen internationalen Sicherheitsstandards eingehalten werden, insbesondere bezüglich Basic Access Control (BAC) und Extended Access Controll (EAC).

Nach einer Ausführungsform der Erfindung hat das Dokument eine Anzeigevorrichtung, auf der die Personalisierungsdaten und/oder die Kennung ausgegeben werden kann. Im Prinzip können dabei beliebige Anzeigetechnologien zum Einsatz kommen, wie zum Beispiel Liquid Crystal Display (LCD), Organic Light Emitting Diode (OLED), Drehelement-Anzeige, elektrochrome, elektrophoretische und/oder elektrowetting Anzeigetechnologien. In Ausführungsformen der Erfindung werden die Anzeigen zumindest teilweise drucktechnisch aufgebracht; hierzu eignen sich insbesondere OLED Anzeigen, sowie elektrochrome und elektrophoretische Displays.

Nach einer Ausführungsform der Erfindung erfolgt die Anzeige zumindest der Personalisierungsdaten auf einer bistabilen Anzeigevorrichtung, die für die Anzeige der Personalisierungsdaten nicht ständig elektrische Energie aufnehmen muss. Dies hat den Vorteil, dass die Personalisierungsdaten auch ohne eine elektrische Stromversorgung auf dem Dokument lesbar sind. Dies hat den weiteren Vorteil, dass auf eine in das Dokument integrierte Stromversorgung, wie zum Beispiel eine Batterie oder eine Solarzelle, verzichtet werden kann.

Wird erfindungsgemäß auf einem Anzeigeelement eine Kennung, ein Einmalpasswort, eine Zufallszahl oder ähnliches dargestellt, so wird bevorzugt entweder über die verwendete Anzeigetechnologie und / oder über ein geeignetes Protokoll sichergestellt, dass nach der Transaktion dieser Inhalt nicht mehr auf dem Anzeigeelement dargestellt ist. Wird ein bistabiles Anzeigeelement verwendet, so kann zu Beispiel nach Abschluss der Transaktion ein definierter Zustand ("Leerzustand") oder eine beliebige, nicht relevante Information angezeigt werden, um die zuvor angezeigte Information zu löschen.

Nach einer Ausführungsform der Erfindung hat das Dokument einen Speicherbereich zur Speicherung von unveränderlichen Personalisierungsdaten. Beispiel für unveränderliche Personalisierungsdaten können Name, Geburtsdatum, Gültigkeitsdauer, Dokumentennummer, Passbild sowie weitere biometrische Daten sein. Die unveränderlichen Personalisierungsdaten können auf dem Dokument aufgedruckt sein und / oder über eine der Anzeigvorrichtungen, vorzugsweise eine bistabilen Anzeigevorrichtung, ausgegeben werden. Die unveränderlichen Personalisierungsdaten können auch nach erfolgreicher Durchführung eines kryptographischen Protokolls nicht in dem Datenspeicher geändert werden.

Lediglich bei der Erstausstellung des Dokuments können diese Daten von einer autorisierten Behörde in das Dokument eingegeben werden. Werden diese Daten über ein Display angezeigt, so ergibt sich der Vorteil, dass Dokumente zentral vorgefertigt und dezentral personalisiert werden können, da für die Personalisierung keine Anlage für den Sicherheitsdruck benötigt wird.

Nach einer Ausführungsform der Erfindung sind die ersten und zweiten Anzeigevorrichtungen von einander gegenüberliegenden Seiten des Dokuments aus sichtbar. Die erste und / oder die zweite Anzeigevorrichtung können die Vorderseite bzw. die Rückseite des Dokuments im wesentlichen vollflächig ausfüllen. Letzteres ist besonders vorteilhaft, wenn auf ein Bedrucken des Dokuments mit personenbezogenen Daten gänzlich verzichtet werden soll. Die Anzeigevorrichtungen können aber auch jeweils nur einen Teil der Vorder- bzw. Rückseite des Dokuments einnehmen. Zusätzlich können statische Elemente des Sicherheitsdrucks, zum Beispiel so genannte Guillochen, drucktechnisch auf das Dokument aufgebracht sein.

Nach einer Ausführungsform der Erfindung hat das Dokument ein Inlay, auf oder in dem Leiterbahnen zur Kontaktierung der Anzeigevorrichtungen ausgebildet sind. Insbesondere können Durchkontaktierungen, sogenannte vias, für die Kontaktierung der von verschiedenen Seiten des Dokuments sichtbaren Anzeigevorrichtungen auf oder in dem Inlay ausgebildet sein.

Nach einer weiteren Ausführungsform stellt ein flexibles Display, welches zu beiden Seiten verschiedene Informationen darstellt, selbst den Dokumentenkörper oder eines Teils davon dar.

Nach einer Ausführungsform der Erfindung sind der Prozessor, der Datenspeicher, die Mittel zur Durchführung eines kryptographischen Protokolls und / oder die Schnittstelle zu einem elektronischen Schaltkreis, wie z.B. einem Microcontroller, integriert. Dieser elektronische Schaltkreis kann auf oder in dem Inlay angeordnet sein.

Nach einer Ausführungsform der Erfindung handelt es sich um ein Identifikationsdokument, einen Pass, Personalausweis, ein Visum, einen Führerschein, einen Firmenausweis, einen Berechtigungsnachweis oder dergleichen.

Insbesondere kann das Dokument papierbasiert und/oder kunststoffbasiert und/oder als Chipkarte ausgebildet sein.

Im weiteren werden bevorzugte Ausführungsformen der Erfindung mit Bezugnahme auf die Zeichnungen näher erläutert. Es zeigen:
- Figur 1: eine schematische Darstellung einer Vorderseite einer Ausführungsform eines erfindungsgemäßen Dokuments,
- Figur 2: eine schematische Darstellung der Rückseite der Ausführungsform der Figur 1,
- Figur 3: eine schematische Darstellung der Vorderseite einer Ausführungsform eines erfindungsgemäßen Dokuments,
- Figur 4: eine schematische Darstellung der Rückseite der Ausführungsform der Figur 3,
- Figur 5: eine schematische Schnittdarstellung einer Ausführungsform eines erfindungsgemäßen Dokuments,
- Figur 6: ein Blockdiagramm einer weiteren Ausführungsform eines erfindungsgemäßen Dokuments und eines erfindungsgemäßen Schreibgeräts,
- Figur 7: ein Blockdiagramm einer weiteren Ausführungsform eines erfindungsgemäßen Dokuments und eines erfindungsgemäßen Schreibgeräts sowie eines Lesegeräts.

Elemente der nachfolgenden Ausführungsformen, die einander entsprechen, sind mit denselben Bezugszeichen gekennzeichnet.

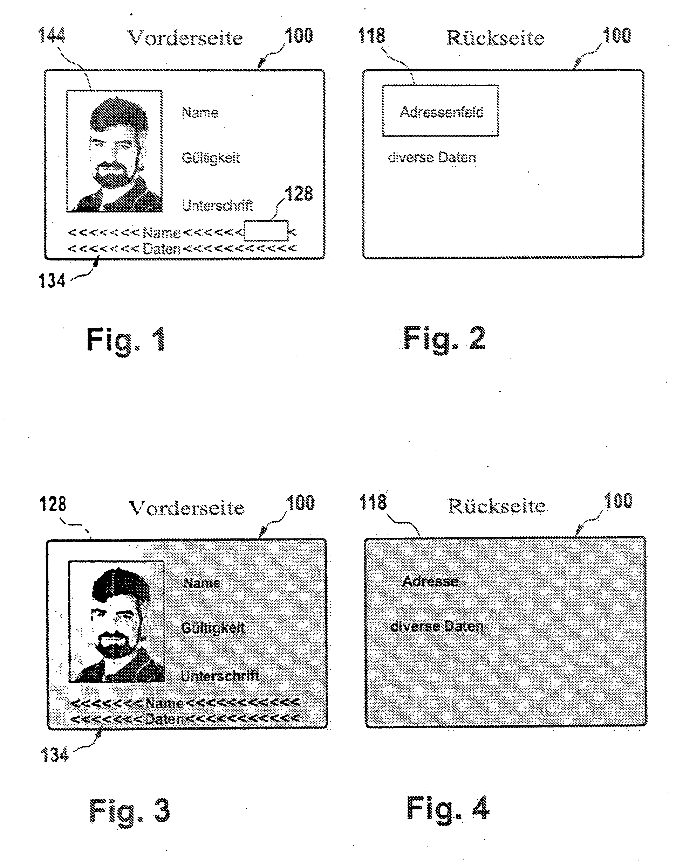

Die Figur 1 zeigt die Vorderseite eines Dokuments 100. Bei dem Dokument 100 handelt es sich bei der hier betrachteten Ausführungsform um ein Ausweisdokument. Das Dokument 100 ist papier- und / oder kunststoffbasiert. Das Dokument 100 ist mit einem Gesichtsbild 144 des Trägers des Dokuments 100 bedruckt sowie mit weiteren Personalisierungsdaten, wie zum Beispiel dem Namen des Trägers des Dokuments 100, der Gültigkeit des Dokuments 100 sowie einer Wiedergabe einer Unterschriftsprobe des Trägers des Dokuments 100. An seinem unteren Rand hat das Dokument 100 die sogenannte MRZ (machine readable zone) Zeile 134. Innerhalb der MRZ ist die Anzeigevorrichtung 128 angeordnet, so dass eine von dem Dokument generierte Kennung als Teil der MRZ auf der Vorderseite des Dokuments 100 optisch lesbar ist.

Die Figur 2 zeigt die Rückseite des Dokuments 100 der Figur 1. Auf der Rückseite des Dokuments 100 ist eine Anzeigevorrichtung 118 sichtbar. Die Anzeigevorrichtung 118 hat beispielsweise ein Adressenfeld zur Anzeige der Adresse des Trägers des Dokuments 100. Ferner kann die Rückseite des Dokuments 100 mit weiteren unveränderlichen Personalisierungsdaten, bedruckt sein, zum Beispiel mit der Unterschrift.

Die Figur 3 zeigt die Vorderseite einer weiteren Ausführungsform des Dokuments 100. Bei dieser Ausführungsform ist eine Anzeigevorrichtung 128 vollflächig ausgebildet, so dass sie im wesentlichen die gesamte Vorderseite des Dokuments 100 abdeckt. Dem entsprechend werden personenbezogene Daten, vorzugsweise alle personenbezogenen Daten, wie z.B. das Gesichtsbild 144, der Name, die Gültigkeit, die Unterschrift sowie die gesamte MRZ 134 über die Anzeigevorrichtung 128 ausgegeben.

Entsprechendes gilt für die Rückseite des Dokuments 100 (vgl. Figur 4), die durch die Anzeigevorrichtung 118 gebildet wird. Die Anzeigevorrichtung 118 dient neben der Anzeige der veränderlichen Personalisierungsdaten, das heißt der Adresse, auch zur Anzeige weiterer Daten, wie zum Beispiel auch der unveränderlichen Personalisierungsdaten. Darüber hinaus können auch statische Beschriftungen durch die Anzeigevorrichtung 118 dargestellt werden, so zum Beispiel die Beschriftung der Datenfelder mit den entsprechenden Feldbezeichnungen, zum Beispiel der Feldbezeichnung Name / Surname / Nom für das Feld des Nachnamens. Werden diese Feldbezeichnungen nicht durch die Anzeigevorrichtung 118 dargestellt, so können diese zum Beispiel auch drucktechnisch aufgebracht sein.

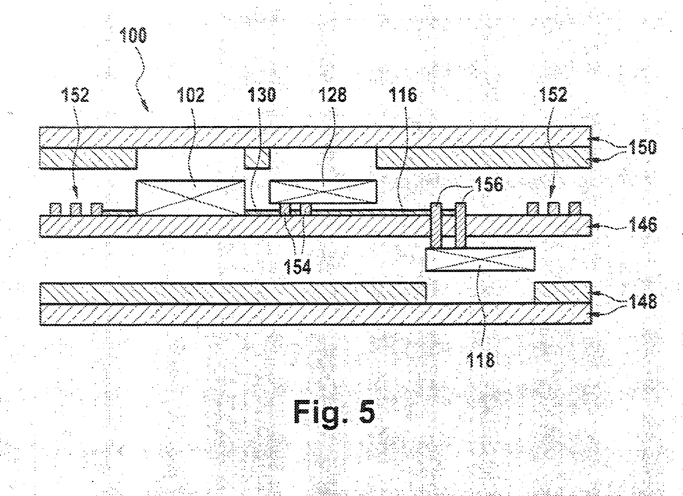

Die Figur 5 zeigt einen schematischen Querschnitt einer Ausführungsform des erfindungsgemäßen Dokuments 100. Bei dieser Ausführungsform des Dokuments 100 handelt es sich um eine sogenannte Smart Card. Das Dokument ist aus mehreren Lagen 146, 148 und 150 aufgebaut.

Die Lage 146 besteht aus einer Folie, dem sogenannten Inlay, auf der sich ein elektronische Gerät 102 befindet. Das elektronische Gerät 102 kann zum Beispiel als integrierter elektronischer Schaltkreis, wie zum Beispiel als Microcontroller realisiert sein. Ferner befindet sich auf dem Inlay der Lage 146 eine Antenne 152 für die kontaktlose Kommunikation mit einem externen Terminal, wie zum Beispiel einem Schreibgerät oder einem Lesegerät. Alternativ oder zusätzlich kann das elektronische Gerät 102 auch über eine kontaktbehaftete oder Dual-Interface Schnittstelle verfügen.

Auf dem Inlay der Lage 146 sind die Anzeigevorrichtungen 128 und 118 aufgebracht. Um diese mit dem elektronischen Gerät 102 zu kontaktieren, sind auf dem Inlay die Leiterbahnen 116 und 130 aufgebracht, die über sogenannte vias 154 bzw. 156 die Anzeigevorrichtungen 128 bzw. 118 kontaktieren.

Die beiden Anzeigevorrichtungen 118 und 128 können, müssen aber nicht die gleiche Anzeigetechnologie verwenden. In einer Ausführungsform der Erfindung hat die Anzeigevorrichtung 128 keine oder nur eine geringe Speicherwirkung und eine relativ kurze Nachleuchtzeit für das angezeigte Bild, während die Anzeigevorrichtung 118 für das Adressfeld ein bistabiles Display, ist. Alternativ oder zusätzlich kann durch eine geeeignete Ansteuerlogik sichergestellt werden, dass die Anzeigevorrichtung 128 keine Speicherwirkung aufweist.

Wenn auf der Anzeigevorrichtung 128 eine durch das elektronische Gerät 102 ermittelte Kennung angezeigt wird, so kann dies durch den damit gegebenen zusätzlichen variablen Parameter in den optisch ausgelesenen Daten der MRZ 134 die Sicherheit der Verschlüsselung für den Datenaustausch zwischen dem elektronischen Gerät 102 und dem Lese- oder Schreibgerät verbessern. Für den Fall, dass die Anzeigevorrichtung 128 im Normalzustand kein Bild anzeigt, kann das Lesegerät zunächst überprüfen, dass in der Tat auf der Anzeigevorrichtung 128 keine Information angezeigt wird. Für eine bistabile Anzeigevorrichtung kann ein Protokoll durchlaufen werden, wobei zum Beispiel zunächst ein vorbestimmter Inhalt - auch ohne jegliche Anzeigefunktion - dargestellt wird, und erst anschließend die eigentliche Information, so dass das Lesegerät die Funktionalität der Anzeigevorrichtung überprüfen kann. Am Ende des Protokolls kann die Anzeigevorrichtung mit einer weiteren Information überschrieben werden oder es wird danach keine Information mehr anzeigt. Auf diese Weise kann sichergestellt werden, dass die Information nicht anschließend von Unbefugten ausgelesen werden kann. Ferner wird dadurch sichergestellt, dass das Dokument z.B. durch einen Aufkleber auf der Anzeigevorrichtung manipuliert werden kann, da dieser ja nur statische Information anzeigen würde.

Die Anzeigevorrichtung 118 für das Adressfeld soll die Adresse über Jahre hin stabil anzeigen, auch wenn sich das Dokument nicht in einem Lesegerät befindet, also nicht mit Energie versorgt wird. Zur Realisierung der Anzeigevorrichtung 118 sind daher bistabile Anzeigetechniken besonders geeignet. Erfindungsgemäß ist zumindest eine der beiden Anzeigevorrichtugen 118 und 128 als bistabile Auzeigevorrichtung ausgebildet.

Die Anzeigevorrichtung 128 kann ebenfalls als bistabile Anzeige ausgebildet sein. Um Manipulationen vorzubeugen, kann hier das Lesegerät zunächst die Anzeige einer bestimmten Information, wie zum Beispiel der Uhrzeit von dem elektronischen Gerät 102 anfordern. Auf diese Art und Weise kann das Lesegerät die Funktionsfähigkeit der Anzeigevorrichtung 128 überprüfen. Anschließend fordert das Lesegerät das elektronische Gerät 102 auf, die Kennung zu generieren und auf der Anzeigevorrichtung 128 anzuzeigen.

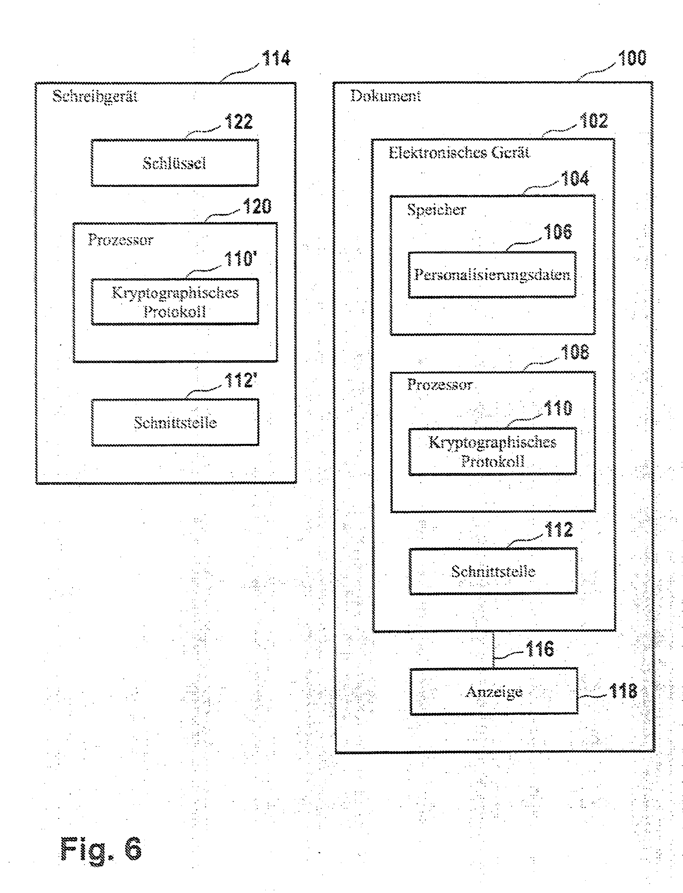

Die Figur 6 zeigt eine weitere Ausführungsform eines erfindungsgemäßen Dokuments 100. Bei dem Dokument 100 kann es sich beispielsweise um ein papierbasiertes Dokument oder um eine Chipkarte handeln. Das Dokument 100 hat ein elektronisches Gerät 102 mit einem Datenspeicher 104 zur Speicherung von Personalisierungsdaten 106. Das elektronische Gerät 102 hat einen Prozessor 108 zur Ausführung von Programminstruktionen 110, die zur Durchführung der das Dokument 100 betreffenden Schritte eines kryptographischen Protokolls dienen.

Das elektronische Gerät 102 hat ferner eine Schnittstelle 112 zur Kommunikation mit einer entsprechenden Schnittstelle 112' eines Schreibgeräts 114. Die Schnittstellen 112, 112' können kontaktbehaftet, drahtlos oder als Dual-Interface-Schnittstellen ausgebildet sein. Insbesondere können durch das Schreibgerät 114 und das Dokument 100 ein RFID-System gebildet werden. Über die Schnittstelle 112' kann das Schreibgerät 114 das elektronische Gerät 102, insbesondere den Prozessor 108, mit elektrischer Energie versorgen.

Das elektronische Gerät 102 ist mit einer Leiterbahn 116 mit einer Anzeigevorrichtung 118 verbunden. Die Anzeigevorrichtung 118 dient zur Anzeige der Personalisierungsdaten 106 oder von Teilen der Personalisierungsdaten 106 auf dem Dokument 100. Bei der Anzeigevorrichtung 118 kann es sich um ein beidseitiges Anzeigeelement handeln, auf dessen Vorder- und Rückseite Informationen wiedergegeben werden können. In diesem Fall werden durch ein einziges beidseitiges Anzeigeelement zwei Anzeigevorrichtungen realisiert. Alternativ oder zusätzlich kann neben der Anzeigevorrichtung 118 zumindest eine weitere Anzeigevorrichtung vorhanden sein, wie in den weiteren Ausführungsformen der Fig. 2 bis 7 dargestellt.

Das elektronische Gerät 102 oder Teile davon können als integrierter elektronischer Schaltkreis, wie zum Beispiel als Microcontroller, ausgebildet sein.

Durch die Ausführung des Dokuments 100 mit einem beidseitigen Anzeigeelement oder zumindest zwei Anzeigevorrichtungen ist aufgrund des dadurch bedingten Aufbaus des Dokuments 100 ein besonderer Fälschungsschutz gegeben, insbesondere wenn das Dokument 100 flach ausgeführt ist, und z.B. eine Dicke von höchstens 2 mm aufweist. Durch die externe Energieversorgung des Dokuments 100 kann ferner auf eine in das Dokument integrierte Energiequelle verzichtet werden, was für die Funktionstüchtigkeit des Dokuments 100 über einen längeren Zeitraum vorteilhaft ist.

Die Schnittstellen 112' und 112 sind vorzugsweise kontaktlos oder als Dual-Interface Schnittstellen ausgebildet, was ebenfalls für die langfristige Funktionstüchtigkeit des Dokuments 100 vorteilhaft ist; insbesondere entfällt dann die Problematik der Korrosion von Kontakten der Schnittstellen 112' und 112.

Das Schreibgerät 114 hat einen Prozessor 120 zur Ausführung von Programminstruktionen 110', die zur Durchführung der das Schreibgerät 114 betreffenden Schritte des kryptographischen Protokolls dienen. Zur Durchführung des kryptographischen Protokolls benötigt das Schreibgerät 114 einen Schlüssel 122.

Zur Aktualisierung der Personalisierungsdaten 106 bzw. von variablen Teilen der Personalisierungsdaten wird wie folgt vorgegangen:

Die Ausführung der Programminstruktionen 110 und 110' wird gestartet, um das kryptographische Protokoll durchzuführen. Beispielsweise wird zunächst die Ausführung der Programminstruktionen 110' auf dem Schreibgerät 114 gestartet, woraufhin ein Steuersignal von dem Schreibgerät 114 über die Schnittstellen 112' und 112 an das elektronische Gerät 102 übertragen wird, woraufhin dort die Ausführung der Programminstruktionen 110 gestartet wird.

Das kryptographische Protokoll wird dann unter Verwendung des Schlüssels 122 durchgeführt. Nach erfolgreicher Durchführung des kryptographischen Protokolls gibt der Prozessor 108 einen Schreibzugriff auf den Datenspeicher 104 frei, so dass das Schreibgerät 114 über die Schnittstelle 112' und die Schnittstelle 112 aktualisierte Personalisierungsdaten zu dem elektronischen Gerät 102 übertragen kann, die dann dort in dem Datenspeicher 104 gespeichert werden. Dies kann so erfolgen, dass die Personalisierungsdaten 106 durch die aktualisierten Personalisierungsdaten überschrieben werden.

Die aktualisierten Personalisierungsdaten erscheinen dann auf der Anzeigevorrichtung 118, wobei das Dokument 100 ansonsten unverändert bleiben kann. Von besonderem Vorteil ist hierbei, dass das Dokument 100 zur Aktualisierung der Personalisierungsdaten 106 nicht durch ein neues ersetzt werden muss, und dass andererseits die Aktualisierung der Personalisierungsdaten 106 in einer Weise erfolgt, die aufgrund der Absicherung durch das kryptographische Protokoll die Vertrauenswürdigkeit des Dokuments 100 nicht schmälert.

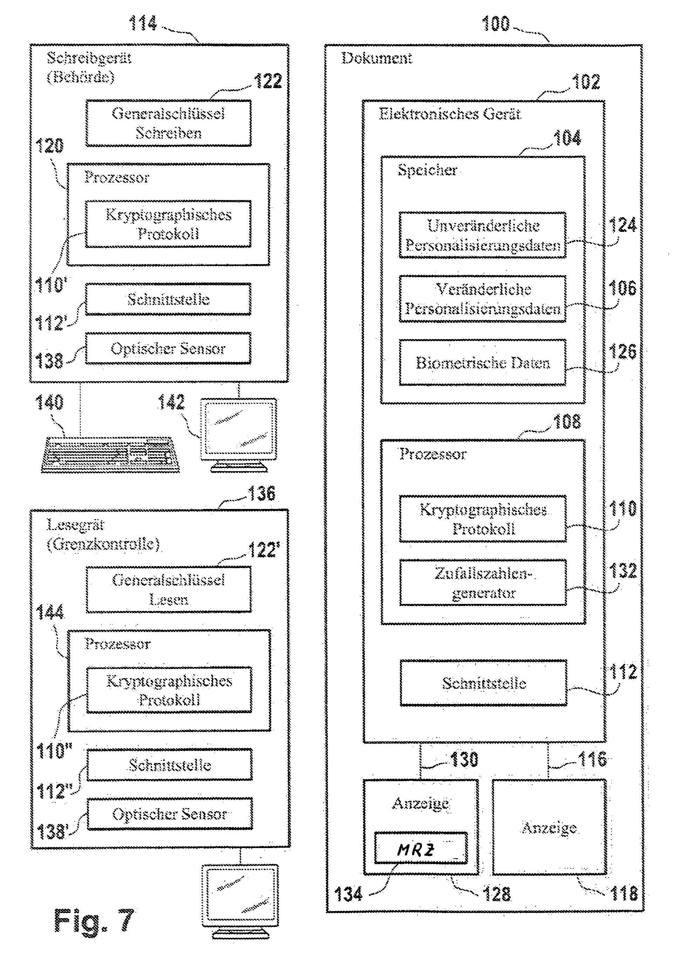

Die Figur 7 zeigt eine weitere Ausführungsform eines erfindungsgemäßen Dokuments 100. Bei dieser Ausführungsform dient der Datenspeicher 104 neben der Speicherung der veränderlichen Personalisierungsdaten 106 zur Speicherung von unveränderlichen Personalisierungsdaten 124 sowie zur Speicherung von biometrischen Daten 126. Wenn es sich bei dem Dokument um ein Ausweisdokument handelt, so können als veränderliche Personalisierungsdaten 106 zum Beispiel der Name und die gegenwärtige Anschrift des Trägers des Dokuments, und als unveränderliche Personalisierungsdaten 124 die Größe, das Geburtsdatum und das Geschlecht in dem Datenspeicher 104 gespeichert sein. Bei den biometrischen Daten 126 kann es sich um ein Gesichtsbild, Gesichtsmerkmale, Fingerabdruckdaten, einen Iris-Scan oder dergleichen biometrische Daten des Trägers des Dokuments 100 handeln.

Für die Anzeigevorrichtung 128 kann ebenfalls eine bistabile Anzeigetechnologie oder eine andere Anzeigetechnologie gewählt werden. Beispielsweise kann die Anzeigevorrichtung 128 als LCD oder OLED-Anzeigevorrichtung ausgebildet sein. Im letzteren Fall ist für den Betrieb der Anzeigevorrichtung 128 elektrische Energie erforderlich, um den Inhalt anzuzeigen.

Das Schreibgerät 114 ist in dem hier betrachteten Ausführungsbeispiel einer Behörde zugeordnet, die dazu befugt ist, die veränderlichen Personalisierungsdaten 106 zu aktualisieren. Hierzu ist der Schlüssel 122 als "Generalschlüssel" für Schreibzugriffe ausgebildet. Der Schlüssel 122 kann in dem Schreibgerät 114 selbst, auf einer in das Schreibgerät 114 einzuschiebenden Chipkarte oder auf einem externen Servercomputer gespeichert sein, mit dem das Schreibgerät 114 kommunizieren kann.

Das Schreibgerät 114 hat eine Tastatur 140 und eine Anzeigevorrichtung 142, wie zum Beispiel einen Bildschirm.

Zur Aktualisierung der veränderlichen Personalisierungsdaten 106 wird wie folgt vorgegangen:

Das Dokument 100 wird in die Nähe des Schreibgeräts 114 gebracht, so dass über die Schnittstellen 112' und 112 Daten zwischen dem Schreibgerät 114 und dem Dokument 100 ausgetauscht werden können. Beispielsweise wird das Dokument 100 hierzu in das Schreibgerät 114 ein- oder aufgelegt.

Ein hierzu autorisierter Benutzer des Schreibgeräts 114 gibt über die Tastatur 140 aktualisierte Personalisierungsdaten ein, die auf der Anzeigevorrichtung 142 angezeigt werden. Durch Betätigung der Eingabetaste der Tastatur 140 wird die Ausführung der Programminstruktionen 110' gestartet.

Daraufhin wird ein Steuerungssignal von dem Prozessor 120 generiert, welches über die Schnittstellen 112', 112 zu dem elektronischen Gerät 102 übertragen wird. Je nach Implementierungsform des Dokuments 100 kann es dann erforderlich sein, dass das Steuerungssignal als Aktivierungssignal an das Dokument gesendet wird, um den bevorstehenden Zugriff auf den Datenspeicher anzukündigen. Daraufhin wird die Ausführung der Programminstruktionen 132 gestartet, so dass eine Kennung, wie zum Beispiel eine Zufallszahl, generiert wird.

Die Kennung wird über die Anzeigevorrichtung 128 im Bereich der MRZ 134 ausgegeben. Die im Bereich der MRZ ausgegebene Kennung wird von dem Schreibgerät 114 mittels dessen optischen Sensors 132 erfasst. Durch Ausführung der Programminstruktionen 110' bewirkt der Prozessor 120 daraufhin, dass aus der Kennung und dem Schlüssel 122 ein weiterer Schlüssel gewonnen wird, der für die Durchführung des kryptographischen Protokolls verwendet wird. Beispielsweise wird auf diese Art und Weise ein symmetrischer oder ein asymmetrischer Schlüssel generiert, der für die erfolgreiche Durchführung des kryptographischen Protokolls für den geplanten Schreibzugriff erforderlich ist.

In einer Ausführungsform der Erfindung wird beispielsweise aus der Kennung und dem Schlüssel 122 ein asymmetrisches Schlüsselpaar bestehend aus einem geheimen und einem öffentlichen Schlüssel generiert. Der öffentliche Schlüssel wird daraufhin von dem Schaltgerät 114 über die Schnittstellen 112', 112 an das elektronische Gerät 102 übertragen. Durch Ausführung der Programminstruktionen 132 wird daraufhin eine weitere Zufallszahl generiert, die mit Hilfe des öffentlichen Schlüssels verschlüsselt wird. Das aus der Verschlüsselung resultierende Chiffrat wird von dem elektronischen Gerät 102 über die Schnittstellen 112, 112' an das Schreibgerät 114 übertragen. Das Schreibgerät 114 entschlüsselt das Chiffrat mit Hilfe des privaten Schlüssels. Das Ergebnis der Entschlüsselung wird von dem Schreibgerät 114 über die Schnittstellen 112', 112 an das elektronische Gerät 102 übertragen.

Durch Ausführung der Programminstruktionen 110 wird dann verglichen, ob das Ergebnis der Entschlüsselung mit der ursprünglich erzeugten Zufallszahl übereinstimmt. Wenn dies der Fall ist, ist damit die Berechtigung des Schreibgeräts 114 für die Durchführung des Schreibzugriffs nachgewiesen, welcher dann freigegeben wird. Durch den Schreibzugriff werden dann die zuvor über die Tastatur 140 eingegebenen aktualisierten Personalisierungsdaten zu dem Dokument 100 übertragen und in dem Datenspeicher 104 gespeichert.

Das Lesegerät 136 ist in der hier betrachteten Ausführungsform einer Grenzkontrolle zugeordnet. Das Lesegerät 136 ist prinzipiell ähnlich aufgebaut, wie das Schreibgerät 114. Das Lesegerät 136 hat einen Prozessor 144 zur Durchführung von Programminstruktionen 110". Die Programminstruktionen 110" dienen zur Durchführung der das Lesegerät 136 betreffenden Schritte eines kryptographischen Protokolls. Dieses kryptographische Protokoll kann identisch oder verschieden sein zu dem durch die Programminstruktionen 110' des Schreibgeräts 114 implementierten Schritten.

Zur Durchführung des kryptographischen Protokolls bedient sich das Lesegerät 136 eines Schlüssels 122', der das Lesegerät 136 dazu berechtigt, lesend auf die biometrischen Daten 126 zuzugreifen. Der Schlüssel 122' kann in dem Lesegerät 136 gespeichert sein oder in einer externen kryptographischen Komponente, wie zum Beispiel einer Chipkarte oder einem über ein Netzwerk ansprechbaren Servercomputer. In den beiden letzteren Fällen erfolgt die Durchführung eines kryptographischen Algorithmus für die Durchführung des kryptographischen Protokolls vorzugsweise in der Chipkarte bzw. in dem Servercomputer.

Die Arbeitsweise des Lesegeräts 136 entspricht der des Schreibgeräts 114, wobei für die Durchführung des kryptographischen Protokolls der Schlüssel 122' verwendet wird, der lediglich zum Lesen der biometrischen Daten 126 ermächtigt. Nach erfolgreicher Durchführung des kryptographischen Protokolls kann das Lesegerät 126 dementsprechend die biometrischen Daten 126 über die Schnittstellen 112, 112" empfangen.

### Bezugszeichenliste

- 100: Dokument
- 102: elektronisches Gerät
- 104: Datenspeicher
- 106: Personalisierungsdaten
- 108: Prozessor
- 110: Programminstruktionen
- 110': Programminstruktionen
- 110": Programminstruktionen
- 112: Schnittstelle
- 112': Schnittstelle
- 112": Schnittstelle
- 114: Schreibgerät
- 116: Leiterbahn
- 118: Anzeigevorrichtung
- 120: Prozessor
- 122: Schlüssel
- 122': Schlüssel
- 124: Personalisierungsdaten
- 126: biometrische Daten
- 128: Anzeigevorrichtung
- 130: Leiterbahn
- 132: Programminstruktionen
- 134: MRZ
- 136: Lesegerät
- 138: optischer Sensor
- 138': optischer Sensor
- 140: Tastatur
- 142: Anzeigevorrichtung
- 144: Gesichtsbild
- 146: Lage
- 148: Lage
- 150: Lage
- 152: Antenne
- 154: via
- 156: via

## Patentansprüche

1. Wert- oder Sicherheitsdokument mit
- einer ersten ansteuerbaren Anzeigevorrichtung (118;),
- einem Prozessor (102, 108) zur Ansteuerung der ersten Anzeigevorrichtung,
- einer Schnittstelle (112) zur Energieversorgung des Prozessors von einer externen Energiequelle (114, 136),
**gekennzeichnet durch**
- zumindest eine zweite ansteuerbare Anzeigevorrichtung (128), wobei der Prozessor zur Ansteuerung der zweiten Anzeigevorrichtung ausgebildet ist, und wobei zumindest eine der Anzeigevorrichtungen als bistabile Anzeigevorrichtung ausgebildet ist so dass sie auch dann Informationen anzeigt, wenn die Schnittstelle von der externen Energiequelle getrennt ist.

2. Wert- oder Sicherheitsdokument nach Anspruch 1, wobei die ersten und zweiten Anzeigevorrichtungen auf einander gegenüberliegenden Seiten des Wert- oder **SI**cherheitsdokuments angeordnet sind.

3. Wert- oder Sicherheitsdokument nach einem der vorhergehenden Ansprüche, mit einem Datenspeicher (106) zur Speicherung von Personalisierungsdaten, Mitteln (108, 110) zur Durchführung eines kryptogrpahischen Protokolls, wobei die Schnittstelle für einen externen Schreibzugriff auf den Datenspeicher zur Veränderung der Personalisierungsdaten ausgebildet ist, und wobei der externe Schreibzugriff die Durchführung des kryptographischen Protokolls voraussetzt.

4. Wert- oder Sicherheitsdokument nach Anspruch 3, mit Mitteln (108, 132) zur Generierung einer Kennung zur Verwendung für das kryptographische Protokoll.

5. Wert- oder Sicherheitsdokument nach Anspruch 4, wobei aus der Kennung und einem ersten **Schlüssel** (122) ein zweiter Schlüssel für die Durchführung des kryptographischen Protokolls erzeugbar ist.

6. Wert- oder Sicherheitsdokument nach Anspruch 4 oder 5, wobei die Mittel zur Generierung der Kennung so ausgebildet sind, dass sich die Kennung nach zeitlichen Abständen ändert.

7. Wert- oder Sicherheitsdokument nach Anspruch 4 oder 5, wobei die Mittel zur Generierung der Kennung so ausgebildet sind, dass für jeden externen Schreib- und /oder Lesezugriff eine Kennung generiert wird.

8. Wert- oder Sicherheitsdokument nach einem der vorhergehenden Ansprüche 4 bis 7, wobei die Kennung eine Zufallszahl und/oder eine Uhrzeit beinhaltet.

9. Wert- oder Sicherheitsdokument nach einem der vorhergehenden Ansprüche 3 bis 8, wobei der Datenspeicher zur Speicherung von unveränderlichen Personalisierungsdaten (124) dient, und wobei die erste und/oder die zweite Anzelgevorrichtung zur Anzeige der unveränderlichen Personalisierungsdaten ausgebildet ist.

10. Wert- oder Sicherheitsdokument nach einem der vorhergehenden Ansprüche, wobei es sich bei der ersten und / oder zweiten Anzeigevorrichtung um eine elektrophoretische Anzeige, eine elektrochrome Anzeige, eine elektrowetting-Anzeige, bistabile Anzeige, eine Drehelementanzeige, eine LCD-Anzeige oder ein OLED-Anzeige handelt.

11. Wert- oder Sicherheitsdokument nach einem der vorhergehenden Ansprüche, mit einem Inlay (146) und in oder auf dem Inlay angeordneten Leiterbahnen (116, 130) zur Kontaktierung der ersten und / oder zweiten Anzeigevorrichtung mit dem Prozessor.

12. Wert- oder Sicherheitsdokument nach einem der vorhergehenden Ansprüche, wobei der Prozessor, der Datenspeicher, die Mittel zur Durchführung des kryptographischen Protokolls und / oder die Schnittstelle in einem Schaltkreis (102) integriert sind, und wobei der Schaltkreis in oder auf dem Inlay angeordnet ist.

13. Wert- oder Sicherheitsdokument nach Anspruch 11 oder 12, wobei die Kontaktlerung der ersten und / oder zweiten Anzeigevorrichtung mittel Durchkontaktierungen (154, 156) erfolgt.

14. Wert- oder Sicherheitsdokument nach einem der vorhergehenden Ansprüche, wo-y bei es sich um ein Identifikationsdokument, ein Pass, Personalausweis, ein Visum, einen **Führerschein,** einen Firmenausweis, einen Berechtigungsnachweis oder dergleichen handelt.

15. Wert- oder Sicherheitsdokument nach einem der vorhergehenden Ansprüche, wobei die ersten und zweiten Anzeigevorrichtungen durch ein einziges Anzeigeelement realisiert sind, wobei das Anzeigeelement zur beidseitigen Anzeige verschiedener Informationen ausgebildet ist.

## Claims

1. Security or valuable document having
- a first display mechanism (118) which can be driven,
- a processor (102, 108) for driving the first display mechanism,
- an interface (112) for supplying power to the processor from an external power source (114, 136),
**characterized by**
- at least a second display mechanism (128) which can be driven, the processor being designed to drive the second display mechanism, and at least one of the display mechanisms being designed as a bistable display mechanism, so that it also displays information when the interface is disconnected from the external power source.

2. Security or valuable document according to Claim 1, the first and second display mechanisms being arranged on opposite sides of the security or valuable document.

3. Security or valuable document according to one of the preceding claims, having a data memory (106) for storing personalization data, and means (108, 110) for carrying out a cryptographic protocol, the interface being designed for external write access to the data memory in order to alter the personalization data, and the external write access presupposing that the cryptographic protocol has been carried out.

4. Security or valuable document according to Claim 3, having means (108, 132) for generating an identifier for use for the cryptographic protocol.

5. Security or valuable document according to Claim 4, a second key for carrying out the cryptographic protocol being able to be generated from the identifier and a first key (122).

6. Security or valuable document according to Claim 4 or 5, the means for generating the identifier being designed in such a manner that the identifier changes after intervals of time.

7. Security or valuable document according to Claim 4 or 5, the means for generating the identifier being designed in such a manner that an identifier is generated for each external write and/or read access.

8. Security or valuable document according to one of the preceding Claims 4 to 7, the identifier comprising a random number and/or a time.

9. Security or valuable document according to one of the preceding Claims 3 to 8, the data memory being used to store inalterable personalization data (124), and the first and/or second display mechanism being designed to display the inalterable personalization data.

10. Security or valuable document according to one of the preceding claims, the first and/or second display mechanism being an electrophoretic display, an electrochromic display, an electrowetting display, a bistable display, a rotating element display, an LCD display or an OLED display.

11. Security or valuable document according to one of the preceding claims, having an inlay (146) and conductor tracks (116, 130) which are arranged in or on the inlay and are intended to contact-connect the first and/or second display mechanism to the processor.

12. Security or valuable document according to one of the preceding claims, the processor, the data memory, the means for carrying out the cryptographic protocol and/or the interface being integrated in a circuit (102), and the circuit being arranged in or on the inlay.

13. Security or valuable document according to Claim 11 or 12, the first and/or second display mechanism being contact-connected using plated-through holes (154, 156).

14. Security or valuable document according to one of the preceding claims, said document being an identification document, a passport, an ID card, a visa, a driving license, a company ID card, an authorization permit or the like.

15. Security or valuable document according to one of the preceding claims, the first and second display mechanisms being implemented using a single display element, the display element being designed to display different information on both sides.

## Revendications

1. Document de valeur ou sécurisé comprenant
- un premier dispositif d'affichage (118) commandable ;
- un processeur (102, 108) pour commander le premier dispositif d'affichage ;
- une interface (112) pour l'alimentation en énergie du processeur depuis une source d'énergie externe (114, 136) ;
**caractérisé par**
- au moins un deuxième dispositif d'affichage (128) commandable, le processeur étant configuré pour commander le deuxième dispositif d'affichage et au moins l'un des dispositifs d'affichage étant réalisé sous la forme d'un dispositif d'affichage bistable de sorte qu'il affiche également des informations lorsque l'interface est déconnectée de la source d'énergie externe.

2. Document de valeur ou sécurisé selon la revendication 1, dans lequel le premier et le deuxième dispositif d'affichage sont disposés sur des côtés opposés l'un à l'autre du document de valeur ou sécurisé.

3. Document de valeur ou sécurisé selon l'une des revendications précédentes, comprenant une mémoire de données (106) pour mémoriser des données de personnalisation, des moyens (108, 110) pour exécuter un protocole cryptographique, l'interface étant configurée pour un accès en écriture externe à la mémoire de données en vue de modifier les données de personnalisation, et l'accès en écriture externe présupposant l'exécution du protocole cryptographique.

4. Document de valeur ou sécurisé selon la revendication 3, comprenant des moyens (108, 132) pour générer un identifiant à utiliser pour le protocole cryptographique.

5. Document de valeur ou sécurisé selon la revendication 4, dans lequel une deuxième clé peut être générée à partir de l'identifiant et d'une première clé (122) pour exécuter le protocole cryptographique.

6. Document de valeur ou sécurisé selon la revendication 4 ou 5, dans lequel les moyens pour générer l'identifiant sont configurés de telle sorte que l'identifiant varie après des intervalles dans le temps.

7. Document de valeur ou sécurisé selon la revendication 4 ou 5, dans lequel les moyens pour générer l'identifiant sont configurés de telle sorte qu'un identifiant est généré pour chaque accès en écriture et/ou en lecture externe.

8. Document de valeur ou sécurisé selon l'une des revendications 4 à 7, dans lequel l'identifiant contient un nombre aléatoire et/ou une heure.

9. Document de valeur ou sécurisé selon l'une des revendications 3 à 8, dans lequel la mémoire de données sert à mettre en mémoire des données de personnalisation (124) non modifiables et dans lequel le premier et/ou le deuxième dispositif d'affichage sont configurés pour afficher les données de personnalisation non modifiables.

10. Document de valeur ou sécurisé selon l'une des revendications précédentes, dans lequel le premier et/ou le deuxième dispositif d'affichage sont un afficheur électrophorétique, un afficheur électrochrome, un afficheur à électromouillage, un afficheur bistable, un afficheur à éléments rotatifs, un afficheur à cristaux liquides ou un afficheur à OLED.

11. Document de valeur ou sécurisé selon l'une des revendications précédentes, comprenant une incrustation (146) et des pistes conductrices (116, 130) disposées dans ou sur l'incrustation pour mettre en contact le premier et/ou le deuxième dispositif d'affichage avec le processeur.

12. Document de valeur ou sécurisé selon l'une des revendications précédentes, dans lequel le processeur, la mémoire de données, les moyens pour exécuter le protocole cryptographique et/ou l'interface sont intégrés dans un circuit de commande (102) et dans lequel le circuit de commande est disposé dans ou sur l'incrustation.

13. Document de valeur ou sécurisé selon la revendication 11 ou 12, dans lequel la mise en contact du premier et/ou du deuxième dispositif d'affichage est réalisée au moyen de contacts traversants (154, 156).

14. Document de valeur ou sécurisé selon l'une des revendications précédentes, dans lequel il s'agit d'un document d'identification, d'un passeport, d'une carte d'identité personnelle, d'un visa, d'un permis de conduire, d'une carte d'entreprise, d'une carte d'accréditation ou similaire.

15. Document de valeur ou sécurisé selon l'une des revendications précédentes, dans lequel le premier et le deuxième dispositif d'affichage sont réalisés par un seul élément d'affichage, l'élément d'affichage étant configuré pour afficher des informations différentes des deux côtés.
